# EUROPEAN PATENT APPLICATION

(11) **EP 4 574 279 A1**
(43) Date of publication of application: **25.06.2025**
(21) Application number: 23219597.4
(22) Date of filing: 22.12.2023
(51) Int. Cl.: B05D 1/38, B32B 15/08, B65D 1/12, B65D 25/14, C08G 69/34, C08L 77/08, C09D 5/00, C09D 5/08, C08L 33/02, C08L 63/00, C08G 69/26

(54) **ANTI-CORROSION COATING COMPRISING A PRIMER AND A TOPCOAT**

(71) Applicant: ARKEMA FRANCE, 92800 Puteaux (FR); PPG Industries Ohio, Inc., Cleveland, OH 44111 (US)
(72) Inventor: LOZE, Jean-Yves, 27470 SERQUIGNY (FR); CARRERAS, Santiago, 27470 SERQUIGNY (FR); FOUCHER, Sylvie, 76290 Saint Martin du Manoir (FR)
(74) Representative: Renard, Emmanuelle

(57) **Abstract**

The invention relates to the field of coatings for protecting varions articles against corrosion, especially parts of a water-treatment or water transportation system. More particularly, the invention relates to a coating comprising a primer and a topcoat, to a coated article comprising this coating, and to a process for manufacturing the same.

## Description

### FIELD OF THE INVENTION

The invention relates to the field of coatings for protecting various metallic articles against corrosion, for instance parts used in water-treatment or water transportation systems.

More particularly, the invention relates to a coating comprising a primer and a topcoat, to a coated article comprising this coating, and to a process for manufacturing the same.

### BACKGROUND OF THE INVENTION

All types of metallic parts, such as pipes, fittings, accessories used in the water industry, oil & gas, as well as metallic parts used in transportation, home appliances and others are susceptible to corrode upon ageing as they are exposed to low to extreme corrosive atmospheres. The corrosion of the metallic surface results in rust formation, which ultimately jeopardizes the metallic part integrity and leads to premature failure of the metal part.

In order to protect metal parts and keep their integrity over time, coatings are generally applied to their surfaces. Among coating systems, epoxy-based coatings are commonly used, and especially some derived from bisphenol A, to remedy such problems.

However, such resins are problematic because bisphenol A has been reported as being an estrogenic material. Therefore, its uses in pipes, fittings and accessories conveying potable or drinking water is perceived as being harmful.

It would thus be desirable to provide a coating, especially those in contact with potable water, which would be devoid of bisphenol A.

The inventors have now found that this need can be satisfied with a specific coating system comprising a primer and a topcoat having a specific composition.

This coating system further provides for higher corrosion resistance and better adhesion to the metal substrate that coating systems based on bisphenol A.

### SUMMARY OF THE INVENTION

One subject of the present invention is thus a coating comprising a primer and a topcoat, wherein:
- the primer is obtained from a primer composition comprising:
   (a) a resinous binder comprising a polymer obtained from monomers including at least one ethylenically-unsaturated monomer having at least one carboxyl or anhydride group,
   (b) the reaction product of:
      (i) at least one epoxidized polyolefin and/or epoxidized oil, and
      (ii) at least one first polyamide being the condensation product of at least one polyamine and at least one oligomeric fatty acid, and
   (c) optionally, at least one anti-corrosive pigment and/or at least one epoxidized fatty ester,
- the topcoat is obtained by melting a powder composition comprising at least one second polyamide being the polymerization product of one or more monomers chosen from aminocarboxylic acids, lactams and monomers resulting from the reaction between an diamine and a dicarboxylic acid.

A subject of the invention is also a coated article comprising:
(a) a metal substrate, wherein the metal is preferably selected from cast iron and iron-containing alloys, such as steel,
(b) the coating mentioned above, deposited on at least a portion of the substrate.

This invention further pertains to a process for manufacturing a coated article, comprising the steps of:
(a) coating at least one portion of a substrate of the article with a primer composition as defined above,
(b) curing the primer composition to obtain a primed substrate,
(c) coating at least one portion of the primed substrate with the topcoat composition as defined above.

Another subject of the invention is the use of the coating as defined above to protect an article against corrosion.

### DETAILED DESCRIPTION

### Definitions

As used herein, unless otherwise expressly specified, all numbers such as those expressing values, ranges, amounts or percentages may be read as if prefaced by the word "about", even if the term does not expressly appear. Moreover, it should be noted that plural terms and/or phrases encompass their singular equivalents and vice versa. For example, "a" or "the" polymer and any other component refers to one or more of these components.

When referring to any numerical range of values, such ranges are understood to include each and every number and/or fraction between the stated range minimum and maximum, as well as the lower and upper limits of the range.

In the context of this description, the term "primer composition" refers to the liquid composition to be applied to a substrate, whereas the term "primer" refers to the cured composition after application to the substrate. Similarly, the term "topcoat composition" refers to the powder composition to be applied as such or once molten onto the primer, whereas the term "topcoat" refers to the cured composition after application to the primer.

As used herein, the term "polymer" refers broadly to prepolymers, oligomers and both homopolymers and copolymers. The term "resin" is used interchangeably with "polymer".

As used herein, the molecular weights are determined by gel permeation chromatography using a polystyrene standard. Unless otherwise indicated, molecular weights are on a number average basis (Mn).

### Primer composition

The primer composition used in this invention comprises a resinous binder and the reaction product of at least one epoxidized polyolefin and/or epoxidized oil with at least one first polyamide.

The resinous binder comprises a polymer (hereafter referred to as the "binder polymer") obtained from monomers including at least one ethylenically-unsaturated monomer having at least one carboxyl or anhydride group.

The ethylenically-unsaturated monomer having at least one carboxyl or anhydride group may be selected from unsaturated dicarboxylic acids or anhydrides thereof, such as itaconic acid, maleic anhydride, crotonic acid and mixtures thereof. Preferably, the ethylenically-unsaturated monomer is selected from (meth)acrylic monomers, i.e. acrylic acid, methacrylic acid and mixtures thereof. In an embodiment, a combination of at least one unsaturated dicarboxylic acid or anhydride with at least one (meth)acrylic monomer may be used.

Typically, the polymer further has reactive functional groups which may react with a crosslinking agent, such as hydroxy, amino, glycidyl and/or vinyl groups.
- These functional groups may be brought by one or more monomers selected from: functional (meth)acrylate monomers, and/or
- functional non-(meth)acrylate monomers.

Examples of functional (meth)acrylate monomers are C1-C8 alkyl esters of acrylic acid, C1-C8 alkyl esters of methacrylic acid and their mixtures. Preferred monomers are hydroxy-substituted monomers of methyl acrylate, ethyl acrylate, propyl acrylate, butyl acrylate, pentyl acrylate, hexyl acrylate, ethylhexyl acrylate, methyl methacrylate, ethyl methacrylate, propyl methacrylate, butyl methacrylate, pentyl methacrylate, hexylmethacrylate, ethylhexyl methacrylate and mixtures thereof. Examples include hydroxyethyl acrylate, hydroxyethyl methacrylate and hydroxypropyl methacrylate. Other functional (meth)acrylate monomers are glycidyl methacrylate, glycidyl acrylate and mixtures thereof.

Non-limiting examples of functional non-(meth)acrylate monomers include acrylamide, N-ethoxymethyl acrylamide, N-butoxymethyl acrylamide, methacrylamide, aromatic monomers such as styrene and vinyl toluene, and mixtures thereof.

The binder polymer is typically formed by free radical polymerization of the monomers in the presence of a free radical initiator. Examples of initiators are azo compounds, such as, for example, α, α' -azobis (isobutyronitrile). Other useful initiators are peroxy compounds such as tertiary-butyl perbenzoate, tertiary-butyl pivalate, tertiary-butylperoxy-2,5,5-trimethyl-hexanoate, tertiary-butyl peroxy acetate, isopropyl percarbonate, benzoyl peroxide and cumene hydroperoxide.

The number average molecular weight (Mn) of the binder polymer is preferably at least 2,000 g/mole, more preferably from 6,000 to 100,000 g/mole. The weight average molecular weight (Mw) of the binder polymer is preferably at least 5,000 g/mole, more preferably from 15,000 to 200,000 g/mole. The binder polymer typically has an acid value (based on wt solid content) of 50 to 400, such as 80 to 250 mg KOH/g; a hydroxyl value (based on mass solid content) of 0 to 150, such as 0 to 90 mg of KOH/g and a glass transition temperature (Tg) of -30 to +120°C, such as + 5 to + 90°C.

Typically, crosslinking agents are present in the resinous binder, which are reactive with the binder polymer. Suitable crosslinking agents are phenoplasts or phenol-formaldehyde resins, aminoplast or triazine-formaldehyde resins and mixtures thereof. The phenol-formaldehyde resins are preferably of the resol type. Examples of suitable phenols include phenol, butyl phenol(including 4-tert butyl phenol), xylenol and cresol (2-methyl phenol, 3-methyl phenol or 4-methyl phenol) and mixtures thereof. The phenol-formaldehyde resol type resins may be used as formed with unmodified hydroxymethyl groups ; or may be further modified by alkylation (etherification) of the hydroxy methyl groups, at least in part, with aliphatic alcohols, such as n-butanol and the like. Cresol-formaldehyde resins, typically etherified with butanol, may also be used. For the preparation of phenolic resins, reference is made to *"*The Chemistry and Application of Phenolic Resins or Phenolplasts", Vol. V, Part I, edited by Dr. Oldring; John Wiley & Sons/Cita Technology Limited, London, 1997. Examples of commercially available phenolic resins are PHENODUR^{®} PR285 and PHENODUR^{®} PR612 PHENODUR^{®} PR516 and PHENODUR^{®} VPR1785 available from Allnex; other examples of commercially available phenolic resins include those resins sold under the trademark BAKELITE^{®}, typically BAKELITE^{®} PF6581 LB, BAKELITE^{®} PF6572 LB and BAKELITE^{®} PF9900 LB from Bakelite Synthetics.

Examples of aminoplast resins are those which are formed by reacting a triazine such as melamine or benzoguanamine with formaldehyde. Preferably, these condensates are etherified with methanol, ethanol, iso-butanol or n-butanol or mixtures thereof. For the chemistry preparation and use of aminoplast resins, see *"*The Chemistry and Applications of Amino Crosslinking Agents or Aminoplast", Vol. V, Part II, page 21 ff., edited by Dr. Oldring; John Wiley & Sons/Cita Technology Limited, London, 1998. These resins are commercially available under the trademark MAPRENAL^{®} such as MAPRENAL^{®} MF590, MAPRENAL^{®} MF590, MAPRENAL^{®} MF600, MAPRENAL^{®} MF900, MAPRENAL^{®} MF904, MAPRENAL^{®} BF891 and MAPRENAL^{®} BF892 and the like from Prefere Resins and under the trademark CYMEL^{®} such as CYMEL^{®} 303, CYMEL^{®}323, CYMEL^{®} 325, CYMEL^{®} 327, CYMEL^{®} 1133, CYMEL^{®} 1158, CYMEL^{®} 1168, CYMEL^{®} 1123 and the like from Allnex.

Typically, the binder polymer is used in amounts of 25 to 70, preferably 30 to 60 percent by weight (on total solids), and the crosslinking agent is present in amounts of 5 to 50, preferably 10 to 40 percent by weight (on total solids), based on the total weight of solids in the primer composition.

Component (i) may be an epoxidized polyolefin and/or an epoxidized oil, preferably an epoxidized polyolefin.

The epoxidized polyolefin is preferably an epoxidized polybutadiene, epoxidized polyisoprene, or an epoxidized copolymer of a diolefin such as a copolymer of butadiene and/or isoprene with styrene. The epoxidation of polyolefins may be carried out in a conventional manner known by a person skilled in the art, for example by means of a carboxylic peracid. Epoxidized polybutadienes, e.g., as described in U.S. Patent No. 3,030,336, are preferred. These epoxidized polybutadienes are characterized by a substantially linear structure having an epoxy oxygen content of 5 to 15, preferably 5 to 10 percent by weight; an epoxy equivalent weight of 300 to 3,000, and a hydroxyl group content (hydroxyl number) of 0.5 to 5.0, for instance from 1 to 3 percent by weight.

Epoxidized oils may be selected among those comprising esters of glycerol with unsaturated fatty acids. Examples of such oils are those rich in linoleic acid, such as soybean, linseed, tung, perilla, cottonseed, corn, sunflower and safflower oil.

The reactive polyamides that are used as the first polyamide in the primer composition are condensation products of polyamines and oligomeric fatty acids. Illustrative of the polyamines are diethylenetriamine, triethylenetetramine, tetraethylene-pentamine and those generally illustrated by the formula H(HNR)ₙNH₂ where R is an alkylene radical having from 2 to 6 carbon atoms and n is an integer of 1 to 6.

The reactive polyamides that are used as the first polyamide in the primer composition are preferably selected from amine-functional polyamides.

The oligomeric fatty acids employed are those resulting from the polymerization of oils or their free acids, or the aliphatic alcohol esters of these acids, particularly from sources rich in linoleic acid. Typical oils include soybean, linseed, tung, perilla, cottonseed, corn, sunflower, safflower and dehydrated castor oils. Suitable fatty acids may also be obtained from tall oil, soap stock and other similar materials. In the process for the preparation of the oligomeric fatty acid, the fatty acids with sufficient double bond functionality combine for the most part probably by a Diels-Alder mechanism, to provide a mixture of dibasic and oligomeric fatty acids.

These acids are referred to as dimers, trimers and the like. The term "oligomeric fatty acids" as used herein, is intended to include any individual oligomeric fatty acid as well as mixtures of oligomeric fatty acids, the latter usually containing a predominant portion of dimer acids, a small quantity of trimer, a higher quantity of polymeric fatty acids and some residual monomer. The oligomeric fatty acids containing predominantly the dimeric form of the acid with some residual monomer and small quantities of trimer and higher polymeric fatty acid, may be hydrogenated if desired and the hydrogenated product employed to form the first polyamide. In addition, the polymeric fatty acids may be distilled to provide relatively high dimer content acids.

The polyamine and the oligomeric fatty acid are condensed at elevated temperatures to form the first polyamide. An excess of polyamine is used to get an amine functional (preferably amine terminated) polyamide in which the amine groups are in the terminal position of the first polyamide. By excess is meant that the ratio of equivalents of amine to equivalents of carboxyl is greater than 1. The resulting reactive polyamide typically has an amine number in the range of 45 to 800 mg KOH/g, preferably from 50 to 600 mg KOH/g.

Alternatively, commercial amine-functional polyamides may be used such as those available from Westlake Chemical / Westlake Epoxy under the Epikure^{®} 3100, 3115, 3125 and 3125 3140 references; or such as those available from Huntsman Corporation under the Versamid^{®} 100, 115, 125 and 140 references. The epoxidized polyolefin (and/or epoxidized oil)-polyamide product may be present in the composition of this invention in amounts of about 1 to 20 percent by weight, based on the total dry weight of the primer composition.

The amount of epoxidized polyolefin / epoxidized oil used in the preparation of the primer composition ranges from 0.05 to 10 weight percent and preferably from 0.1 to 6 weight percent, relative to the total dry weight of the primer composition. The amount of first polyamide used in the preparation of the primer composition ranges from 1 to 15 weight percent and preferably from 2 to 8 weight percent, relative to the total dry weight of the primer composition.

Optional ingredients can be included in the primer composition. Typically, the primer composition will contain a diluent which may be water or at least one organic solvent or a mixture of water and at least one organic solvent to dissolve or disperse the ingredients of the composition. The organic solvent is selected to have sufficient volatility to evaporate essentially entirely from the coating composition during the curing process such as during heating from 100-240°C for about 5 to 60 minutes. Examples of suitable organic solvents or diluents are aliphatic hydrocarbons such as mineral spirits and high flash point VM&P naphtha; aromatic hydrocarbons such as toluene, xylene and solvent naphtha 100, 150, 200 and the like; alcohols, for example, methanol, ethanol, n-propanol, isopropanol, n-butanol, iso-butanol, amyl alcohol and the like; ketones such as acetone, methylethyl ketone, cyclohexanone, methylisobutyl ketone and the like; esters such as ethyl acetate, butyl acetate, n-propyl propionate, 3-ethoxy ethyl propionate and the like; hydroxy esters such as ethyl lactate and the like ; glycol ethers such as methoxypropanol[ propylene glycol monomethylether], methoxypropoxy propanol[di-propyleneglycol monomethyl ether], 2-(2-butoxyethoxy)ethanol[diethylene glycol butyl ether or butyl diglycol] and 2-butoxy ethanol [ethylene glycol monobutyl ether or butyl glycol] and the like; glycol ether esters such as methoxy propyl acetate and 2-butoxyethylacetate and the like. Mixtures of various organic solvents can also be used. Usually, the diluent is used in the primer compositions in amounts of about 20 to 80, such as 30 to 80 percent by weight, based on total weight of the primer composition.

In addition, the binder polymer is typically at least partially neutralized with an amine to assist in the dispersion or dissolution of the resinous binder in an aqueous medium. Non-limiting examples of amines to be used in certain embodiments of this invention include 2-dimethyl-aminoethan-1-ol, 2-dimethylamino-2-methyl-1-propanol, 2-amino-2-methyl-1-propanol, triethylamine and the like.

Adjuvant resins such as polyether polyols and polyurethane polyols may also be included in the primer compositions to maximize certain properties of the resulting primer.

Another optional ingredient that may be present in the primer composition is a catalyst to increase the rate of cure or crosslinking of the primer compositions. Generally, an acid catalyst may be used and is typically present in amounts of about 0.05 to 5 percent by weight. Non-limiting examples of suitable catalysts are dodecyl benzene sulfonic acid, phosphoric acid, methane sulfonic acid, paratoluene sulfonic acid, dinonyl naphthalene disulfonic acid and phenyl phosphonic acid.

Other useful additives are wetting agents, anti-foaming agents, flow agents, levelling agents, surfactants, pigments and lubricants which are preferably present in a total amount of 0.01 to 5 weight percent, based on the weight of the primer composition.

According to a preferred embodiment of this invention, the primer further comprises at least one anti-corrosive pigment and/or at least one epoxidized fatty acid or ester, preferably both of them.

The anti-corrosive pigment may be selected from the group consisting of: modified silicas, such as calcium ion-exchanged amorphous silicas; sulfates, such as barium sulfate; sulphonates; phosphines; oxides such as zinc oxide and magnesium oxide; silicates; phosphates such as zinc phosphate, zinc aluminum phosphate, zinc molybdenum phosphates, calcium phosphate, calcium aluminum polyphosphates and aluminum phosphate; borates and metaborates, such as zinc borate and barium metaborate; molybdates, such as zinc molybdate; phosphosilicates, such as calcium strontium phosphosilicate; and mixtures thereof. Examples of phosphate based corrosion inhibitors include, for example, micronized HALOX^{®} SZP-391, HALOX^{®} 430 calcium phosphate, HALOX^{®} ZP zinc phosphate, commercially available from Halox. Other suitable corrosion inhibitors may include HEUCOPHOS^{®} ZPA and ZAPP zinc aluminum phosphate, HEUCOPHOS^{®} ZAM and ZMP zinc molybdenum phosphates, HEUCOPHOS^{®} ZPO zinc orthophosphates, and HEUCOPHOS^{®} CAPP calcium aluminum polyphosphates, commercially available from Heucotech Ltd; RAYBO^{®} 60, 85; NUBIROX^{®} 301, 302 calcium strontium phosphosilicate; NACORR 1151, 1551, and XR-424.

The anti-corrosive pigment is preferably selected among calcium ion-exchanged amorphous silicas thus as those sold by GRACE under the references SHIELDEX^{®} AC3, SHIELDEX^{®} AC5, SHIELDEX^{®} C303 or SHIELDEX^{®} C311 .

Examples of epoxidized fatty acids or esters include the product of epoxidation of a mono- or polyunsaturated fatty acid or of an ester thereof, in particular an alkyl ester or a glyceride of said fatty acid. The fatty acid may be selected from palmitoleic acid, oleic acid, erucic acid or nervonic acid. The fatty acid or its glyceride may itself be derived from a vegetable oil. The fatty acid alkyl ester may be obtained by transesterification of at least one vegetable oil.

As examples of vegetable oils, mention can be made in particular of wheat germ oil, sunflower oil, argan oil, hibiscus oil, coriander oil, grapeseed oil, sesame oil, maize oil, apricot oil, castor oil, karite oil, avocado oil, olive oil, soybean oil, sweet almond oil, palm oil, colza oil, cotton oil, hazelnut oil, macadamia oil, jojoba oil, alfalfa oil, poppy oil, Chinese okra oil, cucurbit oil, blackcurrant oil, evening primrose oil, lavender oil, borage oil, millet oil, barley oil, quinoa oil, rye oil, safflower oil, candlenut oil, passionflower oil, musk rose oil, echium oil, linseed Oil (flax seed oil), wild flax oil or camellia oil.

The epoxidation of the vegetable oils may be carried out in a conventional manner known by a person skilled in the art, and similarly for their optional transesterification. It is generally preferred to carry out transesterification before epoxidation.

Preferred epoxidized fatty acids or esters according to this invention are epoxidized vegetable oils such as epoxidized soybean oil (epoxidized Soya bean oil) and epoxidized linseed oil.

The primer composition of the present invention can be prepared according to methods well known in the art. For example, the binder polymer may be partly neutralized with an amine, then dispersed in water and mixed with epoxidized polyolefin / epoxidized oil, first polyamide and crosslinker. Alternatively, the partly neutralized binder polymer may be mixed with the reaction product of the epoxidized polyolefin / epoxidized oil and the first polyamide. In certain embodiments of this invention, during the mixing stages, the polymer components in various combinations are heated to temperatures between 50 and 100°C, preferably between 70 and 75°C, for at least 1 or more hours to effect some chemical interaction between components. The mixture is then thinned with more water to achieve a manageable viscosity. Additives and pigments are then optionally added, followed by thinning with additional water and other diluents to achieve the desired solids and viscosity.

### Topcoat Composition

In addition to a primer, the coating of this invention further comprises a topcoat obtained by melting a powder composition comprising at least one second polyamide.

The second polyamide (homopolyamide or copolyamide abbreviated as CoPA) is the product of polymerization or polymerization of the same monomer (in the case of homopolyamides) or of several different monomers (in the case of CoPA) chosen from:
- monomers of amino acid or aminocarboxylic acid type, and preferably α,ω-aminocarboxylic acids;
- monomers of lactam type containing from 3 to 18 carbon atoms on the main ring, and which may be substituted;
- monomers of "diamine-diacid" type derived from the reaction between an aliphatic diamine containing between 4 and 18 carbon atoms and a dicarboxylic acid containing between 4 and 18 carbon atoms; and
- mixtures thereof, with monomers having a different number of carbons in the case of copolyamides formed by blends between a monomer of amino acid type and a monomer of lactam type.

In the present description of copolyamides, the term "monomer" should be taken in the sense of a "repeating unit". Specifically, the case in which a repeating unit of the polyamide is formed from the combination of a diacid with a diamine is particular. It is considered that it is the combination of a diamine and a diacid, i.e. the diamine-diacid couple (in equimolar amount), which corresponds to the monomer. This is explained by the fact that, individually, the diacid or the diamine is only a structural unit, which by itself is insufficient to polymerize.

Examples of α,ω-amino acids that may be mentioned include those containing from 4 to 18 carbon atoms, such as aminocaproic acid, 7-aminoheptanoic acid, 11-aminoundecanoic acid, 11-n-heptylaminoundecanoic acid and 12-aminododecanoic acid.

Examples of lactams that may be mentioned include those containing from 3 to 18 carbon atoms on the main ring and which may be substituted. Examples thereof include β,β-dimethylpropiolactam, α,α-dimethylpropiolactam, amylolactam, caprolactam, also known as lactam 6, capryllactam, also known as lactam 8, oenantholactam, 2-pyrrolidone and lauryllactam, also known as lactam 12.

Examples of dicarboxylic acids that may be mentioned include acids containing between 4 and 18 carbon atoms. Examples thereof include adipic acid, sebacic acid, azelaic acid, suberic acid, isophthalic acid, butanedioic acid, 1,4-cyclohexanedicarboxylic acid, terephthalic acid, the sodium or lithium salt of sulfoisophthalic acid, dimerized fatty acids (these dimerized fatty acids have a dimer content of at least 98% and are preferably hydrogenated) and dodecanedioic acid HOOC-(CH₂)₁₀-COOH.

Examples of diamines that may be mentioned include aliphatic diamines containing from 4 to 18 atoms, which may be aryl and/or saturated cyclic diamines. Examples that may be mentioned include hexamethylenediamine, piperazine, tetramethylenediamine, octamethylenediamine, decamethylene-diamine, dodecamethylenediamine, 1,5-diaminohexane, 2,2,4-trimethyl-1,6-diaminohexane, diamine polyols, isophorone diamine (IPD), methylpentamethylenediamine (MPDM), bis(aminocyclohexyl)methane (BACM), bis(3-methyl-4-aminocyclohexyl)methane (BMACM), meta-xylylenediamine, bis(p-aminocyclohexyl)methane and trimethylhexamethylene diamine.

Examples of monomers of "diamine-diacid" type that may be mentioned include those resulting from the polymerization of hexamethylenediamine with a C6 to C36 diacid, especially the monomers: 6.6, 6.10, 6.11, 6.12, 6.14, 6.18. Mention may be made of monomers resulting from the polymerization of decanediamine with a C6 to C36 diacid, especially the monomers: 10.10, 10.12, 10.14, 10.18; or resulting from the polymerization of decanediamine with a terephthalic acid, i.e. the monomer 10.T.

As examples of copolyamides formed from the various types of monomers described above, mention may be made of copolyamides resulting from the polymerization of at least two α,ω-aminocarboxylic acids or from two lactams or from one lactam and one α,ω-aminocarboxylic acid. Mention may also be made of copolyamides resulting from the polymerization of at least one α,ω-aminocarboxylic acid (or a lactam), at least one diamine and at least one dicarboxylic acid. Mention may also be made of copolyamides resulting from the polymerization of an aliphatic diamine with an aliphatic dicarboxylic acid and at least one other monomer chosen from aliphatic diamines different than the preceding one and aliphatic diacids different than the preceding one.

Examples of copolyamides that may be mentioned include copolymers of caprolactam and of lauryllactam (PA 6/12), copolymers of caprolactam, of hexamethylenediamine and of adipic acid (PA 6/6.6), copolymers of caprolactam, of lauryllactam, of hexamethylenediamine and of adipic acid (PA 6/12/6.6), copolymers of caprolactam, of hexamethylenediamine and of azelaic acid, of 11-aminoundecanoic acid, and of lauryllactam (PA 6/6.9/11/12), copolymers of caprolactam, of adipic acid and of hexamethylenediamine, of 11-aminoundecanoic acid, of lauryllactam (PA 6/6.6/11/12), copolymers of hexamethylenediamine, of azelaic acid and of lauryllactam (PA 6.9/12), copolymers of 2-pyrrolidone and of caprolactam (PA 4/6), copolymers of 2-pyrrolidone and of lauryllactam (PA 4/12), copolymers of caprolactam and of 11-aminoundecanoic acid (PA 6/11), copolymers of lauryllactam and of capryllactam (PA 12/8), copolymers of 11-aminoundecanoic acid and of 2-pyrrolidone (PA 11/4), copolymers of capryllactam and of caprolactam (PA 8/6), copolymers of capryllactam and of 2-pyrrolidone (PA 8/4), copolymers of lauryllactam and of capryllactam (PA 12/8), copolymers of lauryllactam and of 11-aminoundecanoic acid (PA 12/11).

Substances that are particularly preferred are polyamide 11, polyamide 12, PA 6.10, PA 6.12, PA 6.14, PA 6.18, PA 10.10 and PA 10.12, preferably polyamide 11, which has the additional advantage of being of renewable origin.

The present invention includes any PA (homopolyamide or copolyamide) powder in which the particles have a granulometry (D₅₀) of between 5 and 1000 um and preferably between about 25 and 160 um.

As examples of commercially available polyamides that are particularly suitable for the present invention, mention may be made of products of the brand name Rilsan^{®} based on PA 11 and available from Arkema, such as: Rilsan^{®} T Black 7450 AC, Rilsan^{®} T Blue 7444 MAC, Rilsan^{®} T Grey 5161 MAC.

Typically, the topcoat composition comprises from 50% to 99.9% by mass of the second polyamide.

The topcoat composition may also comprise any kind of additive or adjuvant typically used in the field of coatings. These may be additives that give the coating powder and/or topcoat certain specific properties, such as fluidity, flowability, etc. By way of example, the additives may be chosen from film-forming agents, flow aids, impact modifiers, antioxidants, anticorrosion agents, pigments, UV stabilizers, and mixtures thereof.

Any type of additive that contributes toward improving the properties of the powder for its use in aggregation technology may also be used. Mention may be made of powders for infrared absorption, carbon black, mineral fillers for reducing the internal stresses, and flame-retardant additives. Additives for improving the mechanical properties (ultimate stress and elongation at break) of the topcoat, may also be added.

Advantageously, the mixing of the various constituents of the topcoat composition is performed by dry blending. A Henschel mixer may for instance be used for this purpose. In the case of the preparation of powders intended to be applied by "dipping", mixing is preferably performed at a spin speed from about 600 to 1200 rpm. In the case of preparation of powders intended to be applied by "electrostatic" spraying, mixing is preferably performed at a spin speed from about 1500 to 2200 rpm. The powders may then be screened to the appropriate size.

In a preferred embodiment, the primer and topcoat compositions used in the practice of this invention are substantially free, may be essentially free and may be completely free of bisphenol A and derivatives or residues thereof, including bisphenol A ("BPA") and bisphenol A diglycidyl ether ("BADGE"). Such compositions are sometimes referred to as "BPA non intent" because BPA, including derivatives or residues thereof, are not intentionally added but may be present in trace amounts because of unavoidable contamination from the environment. The compositions can also be substantially free and may be essentially free and may be completely free of bisphenol F and derivatives or residues thereof, including bisphenol F and bisphenol F diglycidyl ether ("BPFG"). The term "substantially free" as used in this context means the compositions contain less than 1000 parts per million (ppm), "essentially free" means less than 100 ppm and "completely free" means that less than 20 parts per billion (ppb) of any of the above-mentioned compounds, derivatives or residues thereof.

### Coated article

The coating of this invention and described above has proven to be useful to protect an article against corrosion.

For this purpose, a coated article may be manufactured according to a process comprising the steps of:
(a) coating at least one portion of a substrate with a primer composition as defined above,
(b) curing the primer composition to obtain a primed substrate,
(c) coating at least one portion of the primed substrate with the topcoat composition as defined above.

In a preferred embodiment, the coating (c) is obtained by powder melt-aggregation of the topcoat composition, for example, by heating the topcoat composition above its melting temperature to obtain the topcoat.

This process may optionally include a preliminary step, before step (a), of treating the surface of the substrate, by chemical and/or physical means, for instance with the view to removing impurities that could prevent proper adhesion of the primer to the substrate, such as an oxide layer present on the substrate. This treatment step may comprise degreasing with a solvent, phosphation, chromation, abrading, shot-blasting, sanding and/or sand blasting.

The primer composition can be applied to the substrate by any means known in the art such as spraying, dipping, flow coating, curtain coating or roller application. After application, the primer is then cured. Cure is effected by methods standard in the art, typically at a temperature ranging from 100°C to 360°C during 5 minutes to 60 minutes The person skilled in the art can determine suitable time / temperature ranges for a specific substrate via preliminary tests.

It has been found that the primer thus obtained provided efficient protection against corrosion, which is enhanced by the topcoat. The latter further provides flexibility and resistance against cavitation and/or abrasion to the coating. The primer may have a thickness ranging from 8 to 25 um, whereas the topcoat may have a thickness ranging from 200 to 600 um. These thicknesses may be measured using a coating thickness gauge using the eddy current principle or preferably electromagnetic induction, such as those marketed by Elcometer.

Before applying the topcoat composition, the primer is typically heated between 150 and 360°C, for instance between 300 and 350°C.

To prepare the topcoat, at least one portion of the primer is coated with the topcoat composition as defined above, for example by dipping in a fluidized bed.

Needless to say, the fluidized-bed dipping device is given merely as an example, and any other device for the at least partial manufacture of an article by melt-aggregating of powder, or of coating an article with a film, such as electrostatic spraying or dusting, may also be used in the process of the invention. The process according to the invention especially includes powder aggregation techniques by melting or sintering.

A coated article is thus obtained and also forms part of this invention.

This coated article comprises: (a) a metal substrate, and (b) the coating as described above, deposited on at least a portion of the substrate.

The coated article may be selected from parts of a water-treatment or water transportation system; parts of a dishwasher or a washing machine; automotive parts; parts of chemical equipment; and parts of articles for oil and gas storage and/or transportation. These parts may include containers, pipes, pipelines, pipe fittings, hose, hose fitting, manifolds, valves, turbines and heat exchangers.

The coated article is preferably selected from parts of a water-treatment or water transportation system, a dishwasher or a washing machine, especially pipes, fittings and valves, preferably potable water pipes.

The metal substrate is preferably selected from cast iron and iron-containing alloys such as: steel (including electrogalvanized steel, cold rolled steel and hot-dipped galvanized steel), steel alloys, alloys of iron with zinc, zirconium, titanium, magnesium, aluminum and/or titanium, preferably steel. According to a preferred embodiment of this invention, a bare substrate is used, i.e. the substrate is not covered with any protective coating.

### EXAMPLES

The present invention is illustrated with the aid of the examples below, which do not in any way constitute a limitation of the present invention.

### Example 1: Preparation of coated substrates

### 1.1. Preparation of the primer composition

### a) Synthesis of the acrylic resins

The acrylic polymers used for preparation of primer coatings were prepared in a reactor equipped with a reflux condenser and two tanks for preparing monomer mixtures and initiator mixtures which have addition facilities for adding the tank contents in a constant rate over a set time period.

### Acrylic resin A

A solvent diluted acrylic resin was prepared as follows. To the monomer tank styrene (798 g), methacrylic acid (404 g), ethyl acrylate (810 g) and 2-butoxy ethanol (50 g) was added and mixed. To the initiator tank tertbutyl peroxy acetate as a 50% solution in mineral spirits (48.7 g) and 2-butoxy ethanol (143 g) was added and mixed. 2-Butoxyethanol (928 g) and isopropanol (78 g) were added to the reactor and heated to reflux, at 133°C, whilst stirring well. The contents of the monomer tank and the initiator tank were then added to the reactor simultaneously over a period of 180 minutes whilst maintaining good stirring and reflux at a temperature between 131 and 134°C. At the end of the addition 2-butoxy ethanol (40 g) was added to the reactor from the monomer tank as a line wash and 2-butoxy ethanol (10 g) was added to the reactor from the initiator tank as a line wash. The reactor was then maintained at reflux at a temperature between 131 and 134°C for 30 minutes. At the end of the hold period a mixture of tertbutyl peroxy acetate as a 500 solution in mineral spirits (9.3 g) and 2-butoxy ethanol (30 g) was added from the initiator tank over a period of 30 minutes whilst maintaining reflux at a temperature between 131 and 134°C and at the end of the addition 2-butoxy ethanol (20 g) was added to the reactor from the initiator tank as a line wash. The reactor was then held at temperature for a further 120 minutes whilst maintaining reflux at a temperature between 131 and 134°C. At the end of the hold period 2-butoxy ethanol (430 g) was added to the reactor as the temperature was decreased to 25°C. To adjust the solids content a further amount of 2-butoxy ethanol (130 g) was added.

The final resin sample was a clear solution with a solids content of 54.8% (measured on 0.5 g sample at 110°C for 60 minutes) and a viscosity of 5.12 Pa.s (51.19 Poise) at 25°C measured with a Brookfield viscometer using spindle 7 at 20 rpm). The molecular weight of the polymer was determined as Mn (number average mol weight) 9378 g/mole and Mw (weight average molecular weight) 22596 g/mole ; determined by GPC using polystyrene as Standard.

### Acrylic resin B

A water diluted acrylic resin was prepared as follows. To the monomer tank styrene (436 g), methacrylic acid (556 g), ethyl acrylate (710 g) and 2-butoxyethanol (33 g) were added and mixed. To the initiator tank tert-butylperoxy-2,5,5-trimethyl hexanoate (16.25 g) and n-butanol (65 g) were added and mixed. 2-butoxyethanol (44 g) and n-butanol (1163 g) were added to the reactor and heated to reflux, at 118°C, whilst stirring well. The contents of the monomer tank and the initiator tank were then added to the reactor simultaneously over a period of 240 minutes whilst maintaining good stirring and reflux at a temperature between 115 and 118°C. At the end of the addition 2-butoxy ethanol (32 g) was added to the reactor from the monomer tank as a line wash and 2-butoxy ethanol (20 g) was added to the reactor from the initiator tank as a line wash. The reactor was then maintained at reflux at a temperature between 115 and 118°C for 30 minutes. At the end of the hold period a mixture of tert-butylperoxy-2,5,5-trimethyl hexanoate (8.75 g) and n-butanol (35 g) was added from the initiator tank over a period of 30 minutes whilst maintaining reflux at a temperature between 115 and 118°C and at the end of the addition n-butanol (25 g) was added to the reactor from the initiator tank as a line wash. The reactor was then held at temperature for a further 120 minutes whilst maintaining reflux at a temperature between 115 and 118°C. At the end of the hold period a small sample (approx. 1 g) was taken for determination of molecular weight by GPC, the contents of the reactor was then cooled to 95°C and then a mixture of deionised water (231 g) and 2-(dimethylamino)ethan-1-ol (231 g) was added to the reactor over a period of 15 minutes with good mixing followed by the addition of 2-butoxyethanol (25 g) as a line wash. After a further 15 minutes of mixing at 90°C deionised water (1294 g) was added over 60 minutes whilst allowing the batch to cool steadily.

The final resin sample was checked with the final characteristics with a solids content of 40.9 % (measured on 0.5 g sample at 110C for 60 minutes) and a viscosity of 3.88 Pa.s (38.81 Poise) at 25°C (measured with a Brookfield viscometer spindle 7 at 20 rpm). The molecular weight of the polymer was determined as Mn (number average mol weight) 16658 g/mole and Mw (weight average molecular weight) 46281 g/mole ; determined by GPC using polystyrene as Standard.

### b) Preparation of the primer composition

The acrylic polymers A and B were used to produce the following primer coating compositions.

The primer coatings are made from the components as listed in Table 1 below, and the procedure for manufacture is outlined below. In the following paragraph a listing of the sources of the components with trade names is given.

### Polymer components

The acrylic polymers A and B were used to produce the following primer compositions.

Phenodur^{®} VPR1785 B65 is a phenolic resin supplied as a 65% solids content solution in n-butanol available from Allnex. Poly BD 605E is an epoxidized polybutadiene resin supplied at 100% solids available from Cray valley.

Epikure^{®} 3115 X 70 is an amine functional polyamide supplied at 70 % solids in xylene available from Westlake Chemical. Efka^{®} PL5382 is Epoxidised Soya bean oil with oxirane content of 6.5-7 % available from BASF.

### Additives and other materials

Additol^{®} XL480 is a solution of acrylic polymer supplied at 70 wt% solids in a mixture of the solvents xylene and methoxy propyl acetate, which is available from Allnex and used as a flow agent.

Surfynol^{®} 104 is 2,4,7,9-tetramethyl-5-decyn-4,7-diol available from Evonik GmbH.

Shieldex^{®} AC3 is modified (calcium ion exchanged) amorphous silica available from Grace GmbH.

**Table 1**

| **No** | **Raw material** | **PC1 (g)** | **PC2 (g)** | **PC3 (g)** |
|---|---|---|---|---|
| 1 | Acrylic polymer A | 16.81 | 16.81 | 16.81 |
| 2 | Phenodur VPR1785 65 B | 14.84 | 14.84 | 14.84 |
| | Phenolic resin | | | |
| 3 | n-Butanol | 1.11 | 1.11 | 1.11 |
| 4 | Additol XL 480 | 0.02 | 0.02 | 0.02 |
| 5 | poly BD 605E | 0.13 | 0.13 | 0.13 |
| 6 | n-Butanol | 0.14 | 0.14 | 0.14 |
| 7 | n-Butanol | 0.89 | 0.89 | 0.89 |
| 8 | Epikure 3115 X 70 | 1.80 | 1.80 | 1. 80 |
| 9 | Acrylic polymer B | 16.72 | 16.72 | 16.72 |
| 10 | n-Butanol | 0.84 | 0.84 | 0.84 |
| 11 | De-ionised Water | 18.13 | 18.13 | 18.13 |
| 12 | Surfynol 104 | 0.74 | 0.74 | 0.74 |
| 13 | n-Butanol | 0.25 | 0.25 | 0.25 |
| 14 | caprylic acid | 0.28 | 0.28 | 0.28 |
| 15 | oleic acid | 0.28 | 0.28 | 0.28 |
| 16 | n-Butanol | 1.37 | 1.37 | 1.37 |
| 17 | De-ionised water | 7.23 | 7.23 | 7.23 |
| | | | | |
| 18 | EfkaPL5382 | 1.37 | 0.00 | 0.00 |
| 19 | Shieldex AC3 | 1.37 | 1.37 | 0.00 |
| 20 | De-ionised water | 13.66 | 13.66 | 13.66 |
| 21 | De-ionised water | 2.05 | 2.05 | 2.05 |
| | Total items | 100.0 0 | 98.64 | 99.39 |

The characteristics of these primer compositions are summarized in Table 2 below.

**Table 2**

| **Characteristic** | **PC1** | **PC2** | **PC3** |
|---|---|---|---|
| Solids content (wt%) (1 g, 30 mins, 200°C) | 27.2 | 26.4 | 25.5 |
| Viscosity in seconds of flow time | 36 | 35 | 34 |
| Afnor 4 cup @25°C Standard Test method NF T30-014 | | | |
| pH @20°C | 7.60 | 7.22 | 7.20 |

The primer compositions outlined in Table 1 are all made using the general preparation method as outlined below, in a vessel equipped with effective stirring, heating and cooling and facilities to condense vapors to prevent loss of volatile components.

The method uses the items as listed in the order outlined in Table 1. Items 1 to 3 are charged to the vessel with stirring, which is maintained throughout the preparation process, and the mixture is then heated to 71°C. During the heating process items 4, 5 and 6 are added to the vessel. When the contents of the vessel have reached 71°C a premix of items 7 and 8 is added to the vessel and the contents are then heated to 74°C and held at temperature for 60 minutes. During the temperature hold period items 9 and 10 are mixed together and added to the vessel at the end of the 60 minute hold. The vessel is then held at 74°C for a further 180 minutes. At the end of the temperature hold, item 11 is added over 15 minutes whilst allowing the vessel to cool to 70°C.

Items 12 and 13 are premixed and then added to the vessel at 70°C and the temperature of the vessel are then held at 70°C for 15 minutes. Items 14, 15 and 16 are then premixed and added to the vessel at 70°C and the vessel maintained at 70°C for a further 15 minutes. Item 17 is then added to the vessel whilst allowing the temperature to cool to 25°C. Item 18 is then added to the vessel with continued stirring. Where item 19 is included in the formula, a dispersion is made by mixing 1 part of item 19 with 3 parts of the mixture from the vessel at the point at which item 18 is added. The resulting dispersion is checked for consistency with a visual inspection on a glass plate and then added to the vessel with mixing. Item 20 is then added to the mixture with a period of high speed stirring to complete mixing. Item 21 is then used to adjust the viscosity of the mixture from the vessel to 34 - 41 seconds as measured by an Afnor 4 cup at 25°C.

### 1.2 Coating of the substrates

The coating system was applied as detailed below.

### - Preparation of metal plates:

For each coating system, 3 carbon steel plates measuring 150 x 75 x 3 mm are burnt at 400°C for 20 minutes to remove any traces of grease or pollution from the surface of the plates.

Once cooled, these plates are shot-blasted with hematite angular cast iron shot to obtain a rough surface. The targeted roughness of the plate Rz is between 40 and 80um (roughness measured according to ISO3274 standard).

### - Application of primers:

Primers are applied using a pneumatic spray gun. The primer is applied in crossed passes to ensure even application. After drying at ambient temperature, the primer thickness is approximately 10µm +/- 2um. The thickness of primer applied is checked using an Elcometer WKP 279 type thickness tester.

### - Application of topcoat:

Between 30 minutes and 6 hours after primer application, the metal plates are preheated for 10 minutes at 330°C.

On removal from the oven, the metal plates are dipped into a fluidized bath of biobased polyamide-11 powder (Rilsan^{®} T Grey 5161 MAC from ARKEMA) for 4 seconds, removed from the bath for 2 seconds and dipped again for 2 seconds. On contact with the hot metal, the polyamide powder melts, coalesces and forms a uniform coating.

Final coating thickness is 430µm +/- 30um. It is checked using an Elcometer^{®} WKP 279 thickness gauge.

This method was used to prepare metal plates coated with primers P1, P2 and P3 deriving from Compositions PC1, PC2 and PC3, respectively.

### Example 2 : Corrosion test

The corrosion resistance of the coated plates of Example 1 was assessed by performing the salt spray test described in Standard ISO 12944-2018 and measuring the corrosion at the scribe after 480 hours, 720 hours and 1440 hours. Comparative experiments were conducted on plates coated with a primer based on bisphenol-A (Primgreen^{®} LAT 12035 supplied by ARKEMA), hereafter Primer P-A, and the same topcoat. Three plates were used in each experiment and the mean value was calculated.

The results of this test are summarized in Table 3 below.

**Table 3**

| Primer | Corrosion at scribe (mm) | |
|---|---|---|
| | 720h | 1140h |
| P1 | 0.8 | 1.4 |
| P2 | 0.3 | 1.4 |
| P3 | 0.8 | 1.6 |
| P-A | 1.0 | 1.8 |

This test shows that the coating systems of this invention have higher resistance corrosion than the coating system based on bisphenol-A, in addition to being less harmful. Primers P1 and P2, which contain an anti-corrosive pigment and/or a plasticizer, even resulted in a coating system having a corrosion depth of less than 1.5 mm at 1440h, which corresponds to a corrosive category of C5 according to ISO 12944-2.

### Example 3: Adhesion test

The adhesion of the coating systems of Example 1 to metal plates was evaluated by performing the pull-off test described in Standard ISO 4624, both a 0h and at 1440h. Comparative experiments were conducted on plates coated with a primer based on bisphenol-A (Primgreen LAT 12035 supplied by ARKEMA), hereafter Primer P-A, and the same topcoat.

The results of this test are summarized in Table 4 below.

**Table 4**

| Primer | Adhesion (MPa) | |
|---|---|---|
| | 0h | 1440h |
| P1 | > 9.2 | > 12.9 |
| P2 | > 8.9 | > 13.9 |
| P3 | > 9.0 | > 14.0 |
| P-A | > 9.3 | > 11.0 |

No specific value could be measured because the glue used in this test was removed from the coating system before the coating system could delaminate or separate from the metal plate (adhesive failure between the glue and the topcoat). This test shows that the coating systems of this invention all provide good adhesion to the metal substrate after 1440h, in addition to being less harmful than bisphenol-A.

## Claims

1. A coating comprising a primer and a topcoat, wherein:
- the primer is obtained from a primer composition comprising:
(a) a resinous binder comprising a polymer obtained from monomers including at least one ethylenically-unsaturated monomer having at least one carboxyl or anhydride group,
(b) the reaction product of:
(i) at least one epoxidized polyolefin and/or epoxidized oil, and
(ii) at least one first polyamide being the condensation product of at least one polyamine and at least one oligomeric fatty acid, and
(c) optionally, at least one anti-corrosive pigment and/or at least one epoxidized fatty ester,
- the topcoat is obtained by melting a powder composition comprising at least one second polyamide being the polymerization product of one or more monomers chosen from aminocarboxylic acids, lactams and monomers resulting from the reaction between an diamine and a dicarboxylic acid.

2. The coating as claimed in claim 1, in which the ethylenically-unsaturated monomer is selected from (meth)acrylic monomers.

3. The coating as claimed in claim 1 or 2, in which the binder polymer further has at least one functional group which is reactive with a crosslinking agent.

4. The coating of claim 3 in which the crosslinking agent comprises an aminoplast, a phenoplast or a mixture thereof.

5. The coating as claimed in any one of claims 1 to 4, wherein component (i) is an epoxidized polyolefin, preferably epoxidized polybutadiene.

6. The coating as claimed in any one of claims 1 to 5, in which the first polyamide has an amine number of 45 to 800.

7. The coating of any one of claims 1 to 6, in which the second polyamide is selected from the group consisting of: polyamide 11, polyamide 12, PA 6.10, PA 6.12, PA 6.14, PA 6.18, PA 10.10 and PA 10.12, preferably polyamide 11.

8. The coating of any one of claims 1 to 7, wherein the topcoat composition comprises from 50% to 99.9% by mass of the second polyamide.

9. The coating of any one of claims 1 to 8, wherein the primer comprises at least one anti-corrosive pigment and at least one epoxidized fatty acid or ester.

10. The coating of any one of claims 1 to 9, wherein the anti-corrosive pigment is selected from the group consisting of: modified silicas, such as calcium ion-exchanged amorphous silicas; sulfates, such as barium sulfate; sulphonates; phosphines; oxides such as zinc oxide and magnesium oxide; silicates; phosphates such as zinc phosphate, zinc aluminum phosphate, zinc molybdenum phosphates, calcium phosphate, calcium aluminum polyphosphates and aluminum phosphate; borates and metaborates, such as zinc borate and barium metaborate; molybdates, such as zinc molybdate; phosphosilicates, such as calcium strontium phosphosilicate; and mixtures thereof, preferably the anti-corrosive pigment is selected among calcium ion-exchanged amorphous silicas.

11. The coating of any one of claims 1 to 10, wherein the primer has a thickness of from 8 to 25 um and the topcoat has a thickness of from 200 to 600 µm.

12. The coating of any one of claims 1 to 11, wherein both the primer and the topcoat are substantially free of bisphenol A.

13. A coated article comprising:
(a) a metal substrate, wherein the metal is preferably selected from cast iron and iron-containing alloys, such as steel,
(b) the coating recited in any one of claims 1 to 12, deposited on at least a portion of the substrate.

14. A coated article as claimed in claim 13, which is selected from parts of a water-treatment or water transportation system; parts of a dishwasher or a washing machine; automotive parts; parts of chemical equipment; and parts of articles for oil and gas storage and/or transportation, preferably parts of a water-treatment or water transportation system, a dishwasher or a washing machine, especially pipes, fittings and valves, preferably potable water pipes.

15. A process for manufacturing a coated article, comprising the steps of:
(a) coating at least one portion of a substrate of the article with a primer composition as defined in any one of claims 1 to 12,
(b) curing the primer composition to obtain a primed substrate,
(c) coating at least one portion of the primed substrate with the topcoat composition as defined in any one of claims 1 to 12.

16. Use of the coating as claimed in any one of claims 1 to 12, to protect an article against corrosion.
